# EUROPÄISCHE PATENTSCHRIFT

(11) **EP 2 821 330 B1**
(45) Veröffentlichungstag und Bekanntmachung des Hinweises auf die Patenterteilung: **11.01.2017**
(21) Anmeldenummer: 13175284.2
(22) Anmeldetag: 05.07.2013
(51) Int. Cl.: B62D 35/02

(54) **Unterbodenverkleidung**
Underfloor cladding
Revêtement de sous-sol

(43) Veröffentlichungstag der Anmeldung: 07.01.2015
(73) Patentinhaber: Magna Steyr Fahrzeugtechnik AG & Co KG, 8041 Graz (AT)
(72) Erfinder: Reisenhofer, Eric, 8020 Graz (AT)
(74) Vertreter: Zangger, Bernd

(56) Entgegenhaltungen:
- EP-A1- 2 557 023
- EP-A1- 2 572 918
- DE-A1- 4 319 281
- DE-A1-102006 046 814
- DE-C- 930 724

## Beschreibung

### Gebiet der Erfindung

Die vorliegende Erfindung betrifft eine Unterbodenverkleidung, zur Abdeckung eines Fahrzeugbodens an dessen nach unten gerichteten Außenseite und ein Kraftfahrzeug mit einer solchen Unterbodenverkleidung.

### Stand der Technik

Derartige Unterbodenverkleidungen können zur Verbesserung der aerodynamischen Eigenschaften eines Fahrzeuges, insbesondere im Bereich des Unterbodens eines Kraftfahrzeuges, verwendet werden. Dazu können Unterbodenverkleidungen beispielsweise aerodynamisch ungünstige Anbauteile, wie zum Beispiel eine Ölwanne, überdecken.

Die Unterbodenverkleidungen können ihrerseits aerodynamisch günstig geformt sein, um zu einem möglichst geringen Luftwiderstandsbeiwert des Fahrzeuges beizutragen.

Aus der DE 43 19 281 ist ein plattenförmiges Verkleidungsteil, insbesondere für die Unterseite eines Fahrzeugbodens bekannt, mit wenigstens einem dreieckförmigen Einlaß, der von einer halbtrichterförmigen, Düsenaustritte bildenden Aufwölbung des Verkleidungsteils begrenzt ist. Der Einlaß ist dabei als NACA Einlaß ausgebildet. Durch die Düsenaustritte kann abgesaugte Luft an die gegenüberliegende Seite des Verkleidungsteiles gelangen und dort gegebenenfalls auch unterseitige Fahrzeugaggregate kühlen.

Aus der WO 2002/090172 ist eine Unterflurverkleidung für ein Kraftfahrzeug bekannt, wobei in Unterflurverkleidungs-Teilbereichen eine Vielzahl von voneinander beabstandeten dellenartigen, kalottenförmigen Vertiefungen ausgebildet ist.

Aus der DE 10 2009 018 007 A1 ist eine Unterbodenverkleidung bekannt, mit zumindest einem Mittel zur Befestigung einer Luftleiteinrichtung, die im Wesentlichen senkrecht von der Unterbodenverkleidung absteht und sich quer zur Strömungsrichtung im Bereich zwischen der Vorderachse und der Hinterachse des Kraftfahrzeuges erstreckt.

Aus der EP 2 557 023 A1 ist eine vordere Unterbodenstruktur eines Fahrzeuges bekannt, mit einer abstehenden Ausbildung zur Umlenkung der Luftströmung.

Die EP 2 572 918 A1 ist ein Lufteinlass eines Fahrzeuges bekannt, mit einer Struktur zur Verhinderung des Eintritts von Fremdmaterial durch den Lufteinlass.

Aus der DE 10 2006 046814 A1 ist eine Unterbodenverkleidung für ein Kraftfahrzeug bekannt, umfassend ein am Unterboden des Kraftfahrzeugs lösbar befestigbares flächiges Grundelement, wobei die Unterseite mehrere benachbart zueinander angeordnete Sicken/Rippen zur gezielten Strömungsführung der in Strömungsrichtung an der Unterseite des Grundelements vorbeiströmenden Luft aufweist.

### Zusammenfassung der Erfindung

Es ist eine Aufgabe der Erfindung, eine alternative Unterbodenverkleidung, zur Abdeckung eines Fahrzeugbodens an dessen nach unten gerichteten Außenseite anzugeben, die einen reduzierten Luftwiderstand des Fahrzeuges im Bereich des Fahrzeugbodens ermöglicht.

Die Lösung der Aufgabe erfolgt durch eine Unterbodenverkleidung, zur Abdeckung eines Fahrzeugbodens an dessen nach unten gerichteten Außenseite, wobei die Unterbodenverkleidung eine Fläche mit, an deren in Einbaulage nach unten gerichteten Außenseite, V-förmigen und/oder U-förmigen Ausformungen aufweist, wobei die geschlossenen Seiten der V-förmigen und/oder U-förmigen Ausformungen jeweils der vorgesehenen Luftströmung zugewandt sind, wobei die Ausformungen durch V-förmige und/oder U-förmige Stufen gebildet werden, wobei die Stufen in Richtung der vorgesehenen Luftströmung schräg ausgebildet sind, so dass sie jeweils auf ihrer stromaufwärts angeordneten, geschlossenen Seite eine höhere Stufentiefe aufweisen, als an der stromabwärts angeordneten, offenen Seite.

Erfindungsgemäß verfügt die Unterbodenverkleidung zumindest über einen Bereich, in welchem V-förmige und/oder U-förmige Ausformungen ausgestaltet sind. Dieser Bereich, mitsamt den Ausformungen, bildet eine Fläche, die bevorzugt geschlossen ausgebildet ist, also keine Öffnungen oder Durchtritte zur Ableitung der Luftströmung aufweist. Die Luftströmung wird an jeder Ausformung durch die geschlossene Seite der V- oder U-Form, das heißt, die Spitze des "V" bzw. der Bogen oder Querbalken des "U", abgelenkt. Diese geschlossene Seite weist eingebaut in einem Fahrzeug im Wesentlichen nach vorne, der im Vorwärtsbetrieb des Fahrzeuges anströmenden Luft entgegen, so dass die anströmende Luft zunächst unter dieser geschlossenen Seite der Form hindurch strömt, jedoch im Bereich der offenen Seite der Form zurückgelenkt wird um im Wesentlichen von hinten wieder auf die Spitze bzw. den Querbalken der Ausformung zu treffen. Die Umlenkung der Luft im Bereich der offenen Seite der V- bzw. U-Formen kann insbesondere durch eine geeignete, zum Beispiel schräge Form der geschlossenen Fläche zwischen den Ausformungen und/oder der Ausformungen und/oder die Anordnung der Ausformungen zueinander verstärkt werden.

Hierdurch wird eine deutliche Verbesserung der Luftführung im Bereich des Unterbodens eines Fahrzeuges erreicht, insbesondere durch Ausdehnung des Luftstromes und Ausbildung eines geringeren Luftdruckes unterhalb der Unterbodenverkleidung. Durch die erfindungsgemäße Ausführung einer Unterbodenverkleidung kann auch eine unerwünschte Geräuschentwicklung minimiert werden und die Unterbodenverkleidung versteift werden.

Erfindungsgemäß werden die Ausformungen durch V-förmige und/oder U-förmige Stufen gebildet. Zwischen geschlossenem Ende der V- bzw. U-Form und deren offenem Ende verläuft daher jeweils eine Fläche, die bevorzugt eine Ebene bildet.

Erfindungsgemäß sind die Stufen in Richtung der vorgesehenen Luftströmung schräg ausgebildet, so dass sie jeweils auf ihrer stromaufwärts angeordneten, geschlossenen Seite eine höhere Stufentiefe aufweisen, als an der stromabwärts angeordneten, offenen Seite.

Besonders bevorzugt stehen die geschlossenen Seiten der Ausformungen weiter vom Fahrzeugboden ab als die offenen Enden der Ausformungen. Hierdurch bilden die geschlossenen Seiten der Ausformungen einen guten Widerstand für entgegen der primären Luftströmung zurückströmende Luft.

Die geschlossenen Seiten der Ausformungen stehen bevorzugt im Wesentlichen senkrecht auf den Fahrzeugboden.

Bevorzugt erstreckt sich die Fläche mit V-förmigen und/oder U-förmigen Ausformungen über zumindest einen Großteil der gesamten Fläche der Unterbodenverkleidung, insbesondere über mindestens 50 Prozent oder mindestens 70 Prozent der Unterbodenverkleidung, und weist eine Vielzahl von Ausformungen auf.

Gemäß einer bevorzugten Ausführungsform sind die Ausformungen in mehreren Linien angeordnet, um Kanäle zu bilden.

Die Kanäle verlaufen in Einbaulage besonders bevorzugt jeweils nach hinten außen. Dadurch wird zusätzlich zur Verringerung des Luftdruckes unter dem Fahrzeug der Luftstrom seitlich an die Fahrzeugaußenseite abgeführt und somit der Luftstrom an hinteren Bauteilen des Fahrzeuges verringert.

Bevorzugt sind an der Unterbodenverkleidung zu den offenen Seiten der Ausformungen hin Luftleitstege angeordnet um den Luftstrom kontrolliert abzulenken.

Erfindungsgemäß kann ein Kraftfahrzeug mit einer Unterbodenverkleidung, wie beschrieben, ausgestattet sein.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines Teiles der Unterseite einer erfindungsgemäßen Unterbodenverkleidung.
- Fig. 2: ist eine ausschnittsweise Teildarstellung zu Fig. 1 aus einem anderen Blickwinkel.
- Fig. 3: ist eine ausschnittsweise Teildarstellung zu Fig. 2 aus einem Blickwinkel ähnlich wie in Fig. 1.
- Fig. 4: ist eine schematische Darstellung des Schnittes A-A gemäß Fig. 2.
- Fig. 5: ist eine schematische Darstellung des Schnittes B-B gemäß Fig. 2.
- Fig. 6: ist eine Darstellung einer weiteren Ausführungsform eines Teiles der Unterseite einer erfindungsgemäßen Unterbodenverkleidung.
- Fig. 7: ist eine Darstellung einer Unterseite eines Kraftfahrzeuges mit einer erfindungsgemäßen Unterbodenverkleidung mit (oben) und ohne (unten) zusätzlichen Komponenten des Kraftfahrzeuges.
- Fig. 8: ist eine schematische Darstellung von fünf einzelnen Kanälen mit verschieden geformten Ausformungen.
- Fig. 9: ist eine schematische Darstellung von drei Ausschnitten von erfindungsgemäßen Flächen mit Kanälen.
- Fig. 10: ist eine schematische Darstellung von zwei einzelnen Kanälen mit verschieden positionierten Luftleitstegen.

### Detaillierte Beschreibung der Erfindung

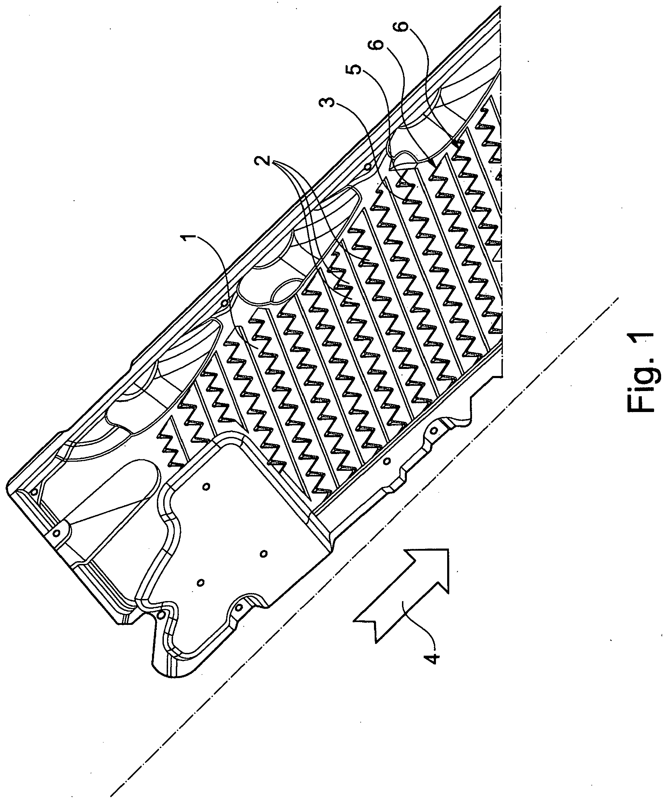

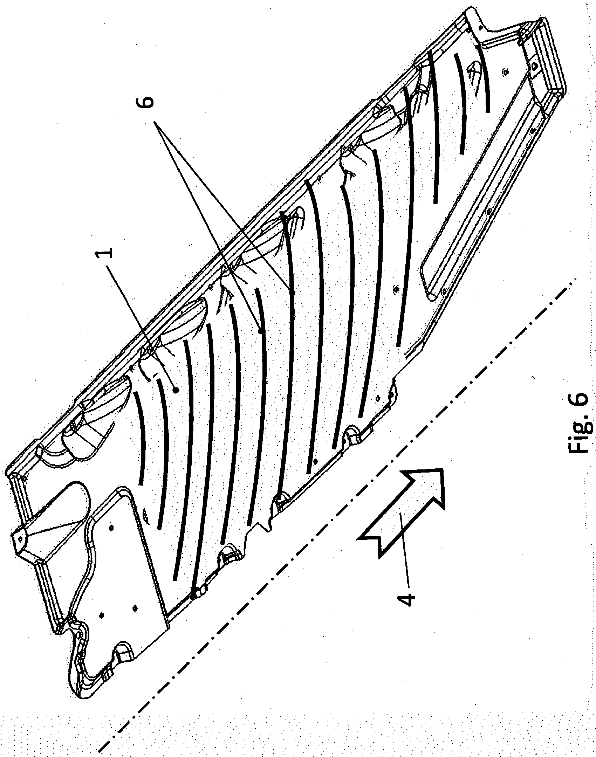

In Fig. 1 ist ein Teil einer erfindungsgemäßen Unterbodenverkleidung, zur Abdeckung eines Fahrzeugbodens an dessen nach unten gerichteten Außenseite, dargestellt, mit einer geschlossenen, also durchgehenden Fläche 1, an deren nach unten gerichteten Außenseite viele V-förmige Ausformungen 2 ausgebildet sind. Die Ausformungen 2 sind in mehreren Linien angeordnet, die Kanäle 6 bilden. Die Kanäle 6 verlaufen beispielsweise in Einbaulage jeweils nach hinten außen und sind im Wesentlichen parallel zueinander angeordnet. In der dargestellten Ausführung sind die Kanäle 6 im Wesentlichen gerade Linien, in alternativen Ausführungen können alle oder manche der Kanäle 6 auch gekrümmt, bogenförmig ausgebildet sein, so dass sie beispielsweise kreisbogenförmig von vorne (Richtung des anströmenden Windes) nach hinten außen verlaufen, wie in Fig. 6 dargestellt.

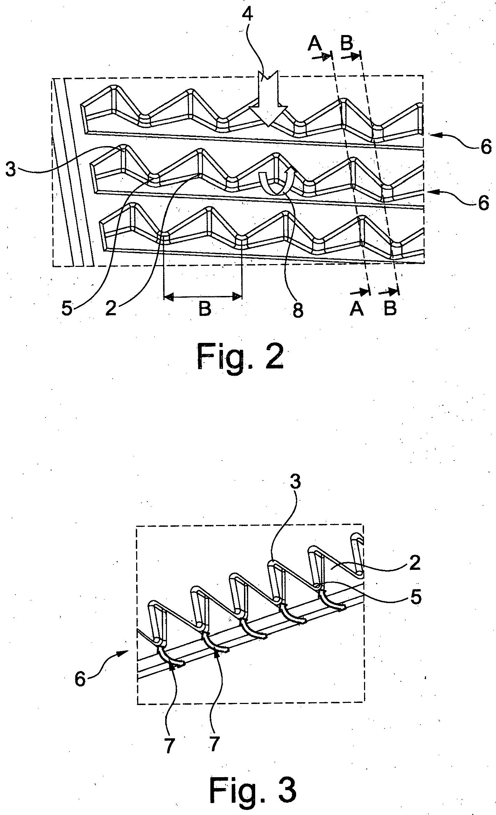

Die V-förmigen (oder U-förmigen) Ausformungen 2 weisen, wie in Fig. 2 gut ersichtlich, geschlossene Seiten 3 der V-Form auf, die der vorgesehenen Luftströmung 4, in einem Kraftfahrzeug der von vorne zuströmenden Luft, zugewandt sind.

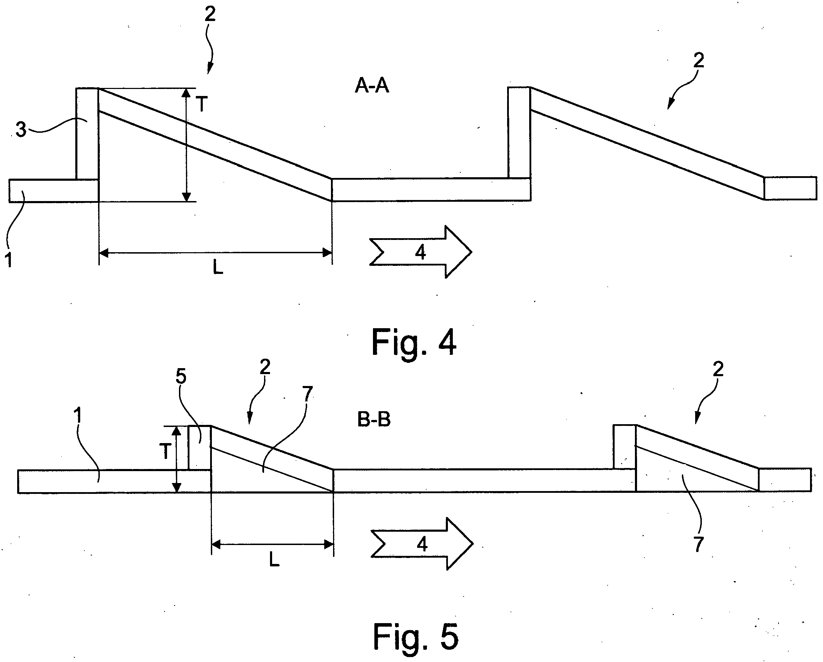

Die Ausformungen 2 bilden V-förmige Stufen, wobei die Stufen in Richtung der Luftströmung 4 derart schräg ausgebildet sind, dass sie jeweils auf ihrer stromaufwärts angeordneten, geschlossenen Seite 3 eine höhere Stufentiefe T aufweisen, als an der stromabwärts angeordneten, offenen Seite 5 - siehe hierzu auch Fig. 4 und Fig. 5.

Die geschlossenen Seiten 3 der Ausformungen 2 stehen im Wesentlichen senkrecht auf die gesamte Fläche der Unterbodenverkleidung.

Durch die V-förmigen Ausformungen 2 wird ein anströmende Luftstrom 4 so umgelenkt, dass er teilweise zunächst in Richtung zur Unterbodenverkleidung und weiters teilweise wieder zurück, zum zuströmenden Luftstrom 4 entgegen geleitet wird, um eine Luftrückströmung 8 zu bilden. Die Luft kann sich dabei ausdehnen, so dass ein geringerer Luftdruck an der Unterseite der Unterbodenverkleidung entsteht. Zusätzlich wird die Luft durch die Form der Kanäle 6 nach außen abgeführt, wodurch sich eine Verringerung der Luftstromwirkung an den Hinterrädern und Bauteilen im hinteren Unterbodenbereich ergibt. Der Effekt der kontrollierten Abführung der Luft kann verbessert sein durch Luftleitstege 7 - siehe Fig. 3 und Fig. 5 - die an der Unterbodenverkleidung zwischen Bereichen ohne Ausformung 2 und den offenen Seiten 5 der Ausformungen 2 angeordnet sind. Dadurch können durchgehende Linien von Luftleitstegen 2 gebildet werden, die jeweils die offenen, flacheren Enden der Ausformungen 2 zweier hintereinander angeordneter Kanäle 6 miteinander verbinden.

Die Schnitte A-A und B-B gemäß Fig. 2 sind in den Fig. 4 und 5 dargestellt, wobei der Schnitt A-A jeweils die geschlossenen, tieferen Seiten der Ausformungen 2 benachbarter Kanäle 6 miteinander verbindet und Schnitt B-B jeweils die offenen, flacheren Seiten der Ausformungen 2 benachbarter Kanäle 6 miteinander verbindet. Typische Maße für die Stufentiefe T in Fig. 4 wären etwa 10-25 mm, in Fig. 5 etwa 5-8 mm. Die Stufenlänge L beträgt an der geschlossenen Seite der Ausformungen 2 bevorzugt 30-50 mm (Fig. 4) und an der offenen Seite (Fig. 5) 12-20 mm. Die ebene Fläche zwischen den Ausformungen 2 kann eine Mikro-Oberflächenstruktur ("Cladding") aufweisen, zur weiteren Senkung des Luftwiderstandes.

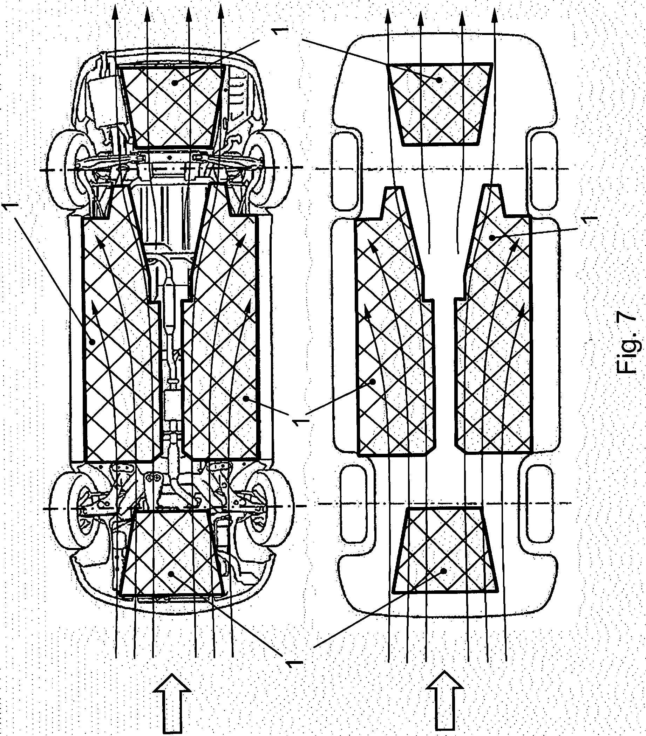

Wie in Fig. 7 ersichtlich kann ein Fahrzeug auch mehrere erfindungsgemäße geschlossene Flächen 1 aufweisen, die beispielsweise voneinander beabstandet angeordnet sein können. Die Anordnung der Kanäle 6 auf den wahlweise mehreren Flächen ist beispielsweise derart möglich, dass ausgehend von der Fahrzeugmitte die Kanäle nach hinten außen verlaufen. Im Bereich vorne und hinten am Kraftfahrzeug kann auf den wahlweise mehreren Flächen eine andere Anordnung der Kanäle ausgebildet sein als an den seitlichen Flächen, beispielsweise quer zur Fahrtrichtung, oder auch dem Verlauf der auf den seitlichen Flächen nach hinten außen angeordneten Kanälen folgend, sodass sich für den ganzen Unterboden eine gleiche Luftstromführung ergibt.

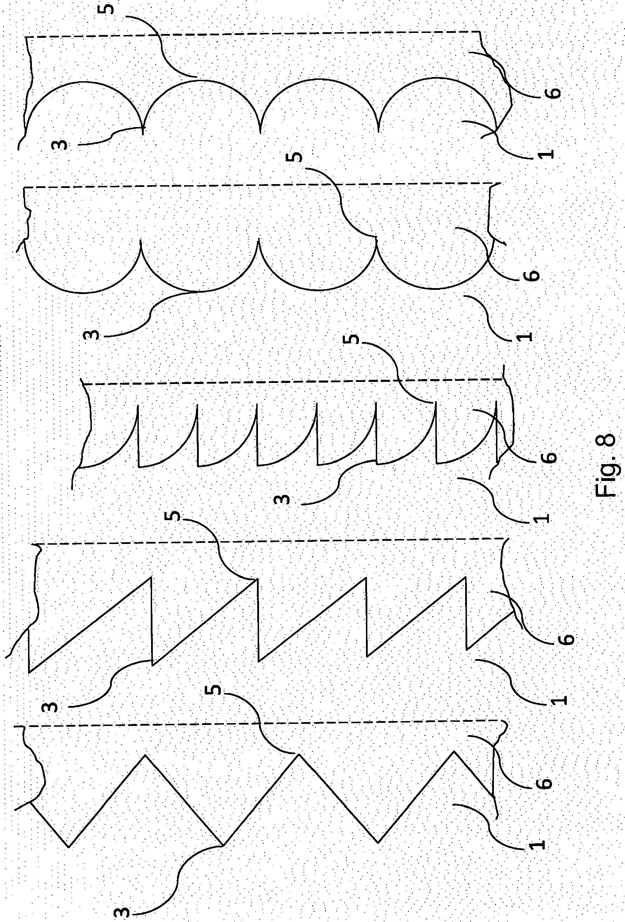

In Fig. 8 sind einige erfindungsgemäß mögliche geometrische Formen der im Wesentlichen V- bzw. U-förmigen Ausformungen 2 dargestellt. Die Ausformungen sind jeweils mit der geschlossenen Seite 3 nach links und der offenen Seite 5 nach rechts dargestellt. Neben einer einfachen V-Form in Fig. 8 ganz links, sind dies eine Sägezahnform, eine Sägezahnform mit einseitig abgerundeten Zähnen, halbkreisförmige Bögen wobei die Kreisbögen die geschlossene Seite 3 darstellen, oder halbkreisförmige Bögen, wobei die spitz zulaufenden Enden der Halbkreise die geschlossene Seite 3 darstellen.

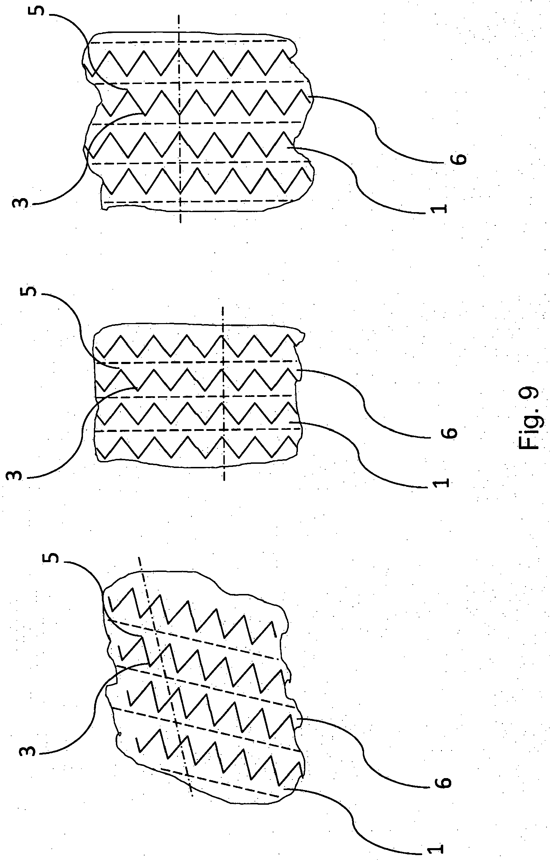

Die Ausformungen 2 von benachbarten Kanälen 6 können, wie in Fig. 9 dargestellt, auf verschiedene Weise zueinander angeordnet sein. So können die geschlossenen Seiten 3, zum Beispiel wie dargestellt Spitze, gleichsinnig hintereinander angeordnet sein (Fig. 9 Mitte) oder auch genau entgegengesetzt hintereinander (Fig. 9 rechts). Die Ausformungen können auch versetzt zueinander positioniert sein (Fig. 9 links).

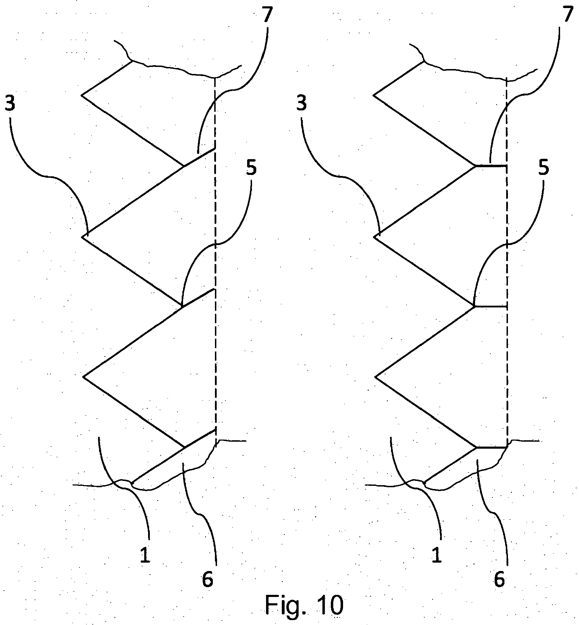

Wie in Fig. 10 dargestellt können auch die Luftleitstege 7 auf verschiedene Weise zu den Ausformungen 2 positioniert sein. Beispielsweise können die Luftleitstege 7 schräg in Bezug auf den Verlauf der Kanäle 6 angeordnet sein und insbesondere den Verlauf der Ausformungen 2 zumindest einseitig weiterführen (Fig. 10 links). Die Luftleitstege 7 können auch normal auf den Verlauf der Kanäle 6 stehen (Fig. 10 rechts). Bei in Bezug auf das Kraftfahrzeug schräg verlaufenden Kanälen 6 können die Luftleitstege 7 beispielsweise in Fahrtrichtung gerade nach hinten weisen.

### Bezugszeichenliste

- 1: geschlossene Fläche
- 2: Ausformung
- 3: geschlossene Seite
- 4: Luftströmung
- 5: offene Seite
- 6: Kanal
- 7: Luftleitsteg
- 8: Luftrückströmung

- T: Stufentiefe
- L: Stufenlänge
- B: Breite der Ausformungen

## Patentansprüche

1. Unterbodenverkleidung, zur Abdeckung eines Fahrzeugbodens an dessen nach unten gerichteten Außenseite, wobei die Unterbodenverkleidung eine Fläche (1) mit, an deren in Einbaulage nach unten gerichteten Außenseite, V-förmigen und/oder U-förmigen Ausformungen (2) aufweist, wobei die geschlossenen Seiten (3) der V-förmigen und/oder U-förmigen Ausformungen (2) jeweils der vorgesehenen Luftströmung (4) zugewandt sind, **dadurch**
**gekennzeichnet, dass** die Ausformungen (2) durch V-förmige und/oder U-förmige Stufen gebildet werden, wobei die Stufen in Richtung der vorgesehenen Luftströmung (4) schräg ausgebildet sind, so dass sie jeweils auf ihrer stromaufwärts angeordneten, geschlossenen Seite (3) eine höhere Stufentiefe (T) aufweisen, als an der stromabwärts angeordneten, offenen Seite (5).

2. Unterbodenverkleidung nach Anspruch 1,
**dadurch gekennzeichnet, dass** die Fläche (1) geschlossen ist, also keine Öffnungen aufweist.

3. Unterbodenverkleidung nach zumindest einem der vorhergehenden Ansprüche,
**dadurch gekennzeichnet, dass** die geschlossenen Seiten (3) der Ausformungen (2) in Einbaulage weiter vom Fahrzeugboden abstehen als die offenen Seiten (5) der Ausformungen (2).

4. Unterbodenverkleidung nach zumindest einem der vorhergehenden Ansprüche,
**dadurch gekennzeichnet, dass** die geschlossenen Seiten (3) der Ausformungen (2) im Wesentlichen senkrecht auf den Fahrzeugboden stehen.

5. Unterbodenverkleidung nach zumindest einem der vorhergehenden Ansprüche,
**dadurch gekennzeichnet, dass** die Fläche (1) mit V-förmigen und/oder U-förmigen Ausformungen (2) sich über zumindest einen Großteil der gesamten Fläche der Unterbodenverkleidung erstreckt und eine Vielzahl von Ausformungen (2) aufweist.

6. Unterbodenverkleidung nach zumindest einem der vorhergehenden Ansprüche,
**dadurch gekennzeichnet, dass** die Ausformungen (2) in mehreren Linien angeordnet sind, um Kanäle (6) zu bilden.

7. Unterbodenverkleidung nach Anspruch 6,
**dadurch gekennzeichnet, dass** die Kanäle (6) in Einbaulage jeweils nach hinten außen verlaufen.

8. Unterbodenverkleidung nach zumindest einem der vorhergehenden Ansprüche,
**dadurch gekennzeichnet, dass** an der Unterbodenverkleidung zu den offenen Seiten (5) der Ausformungen (2) hin Luftleitstege (7) angeordnet sind.

9. Kraftfahrzeug mit einer Unterbodenverkleidung nach zumindest einem der vorhergehenden Ansprüche.

## Claims

1. Underfloor cladding, for covering a vehicle floor on the downwardly directed outer side thereof, wherein the underfloor cladding has a surface (1) with V-shaped and/or U-shaped formations (2) on its outer side, which is directed downwards in the installed position, wherein the closed sides (3) of the V-shaped and/or U-shaped formations (2) in each case face the provided air flow (4), **characterized in that** the formations (2) are formed by V-shaped and/or U-shaped steps, wherein the steps are formed in a sloping manner in the direction of the provided air flow (4) in such a manner that said steps in each case have a higher step depth (T) on the closed side (3) thereof arranged upstream than at the open side (5) arranged downstream.

2. Underfloor cladding according to Claim 1, **characterized in that** the surface (1) is closed, i.e. does not have any openings.

3. Underfloor cladding according to at least either of the preceding claims, **characterized in that**, in the installed position, the closed sides (3) of the formations (2) protrude further from the vehicle floor than the open sides (5) of the formations (2).

4. Underfloor cladding according to at least one of the preceding claims, **characterized in that** the closed sides (3) of the formations (2) are substantially perpendicular to the vehicle floor.

5. Underfloor cladding according to at least one of the preceding claims, **characterized in that** the surface (1) having V-shaped and/or U-shaped formations (2) extends over at least a large part of the entire surface of the underfloor cladding and has a multiplicity of formations (2).

6. Underfloor cladding according to at least one of the preceding claims, **characterized in that** the formations (2) are arranged in a plurality of lines in order to form channels (6).

7. Underfloor cladding according to Claim 6, **characterized in that**, in the installed position, the channels (6) in each case run rearwardly outwards.

8. Underfloor cladding according to at least one of the preceding claims, **characterized in that** air-guiding webs (7) are arranged on the underfloor cladding towards the open sides (5) of the formations (2).

9. Motor vehicle with an underfloor cladding according to at least one of the preceding claims.

## Revendications

1. Revêtement de dessous de caisse, pour recouvrir un plancher de véhicule au niveau de son côté extérieur orienté vers le bas, le revêtement de dessous de caisse comportant une surface (1) avec, au niveau de son côté extérieur orienté vers le bas dans la position de montage, des formations (2) en forme de V et/ou en forme de U, les côtés fermés (3) des formations (2) en forme de V et/ou en forme de U étant respectivement tournés vers le flux d'air (4) prévu, **caractérisé en ce que** les formations (2) sont formées par des marches en forme de V et/ou en forme de U, les marches étant réalisées de façon oblique en direction du flux d'air (4) prévu, de sorte qu'elles comportent respectivement sur leur côté fermé (3) disposé vers l'amont une profondeur de marche (T) supérieure à celle du côté ouvert (5) disposé en aval.

2. Revêtement de dessous de caisse selon la revendication 1, **caractérisé en ce que** la surface (1) est fermée et ne comporte donc aucune ouverture.

3. Revêtement de dessous de caisse selon au moins l'une quelconque des revendications précédentes, **caractérisé en ce que** les côtés fermés (3) des formations (2) ressortent dans la position de montage davantage du plancher de véhicule que les côtés ouverts (5) des formations (2).

4. Revêtement de dessous de caisse selon au moins l'une quelconque des revendications précédentes, **caractérisé en ce que** les côtés fermés (3) des formations (2) tiennent pour l'essentiel verticalement sur le plancher de véhicule.

5. Revêtement de dessous de caisse selon au moins l'une quelconque des revendications précédentes, **caractérisé en ce que** la surface (1) avec les formations (2) en forme de V et/ou en forme de U s'étend sur au moins une grande partie de la surface totale du revêtement de dessous de caisse et comporte une pluralité de formations (2).

6. Revêtement de dessous de caisse selon au moins l'une quelconque des revendications précédentes, **caractérisé en ce que** les formations (2) sont disposées sur plusieurs lignes pour former des canaux (6).

7. Revêtement de dessous de caisse selon la revendication 6, **caractérisé en ce que** les canaux (6) s'étendent respectivement à l'extérieur vers l'arrière dans la position de montage.

8. Revêtement de dessous de caisse selon au moins l'une quelconque des revendications précédentes, **caractérisé en ce que** des étais de guidage d'air (7) sont disposés au niveau du revêtement de dessous de caisse, en direction des côtés ouverts (5) des formations (2).

9. Véhicule automobile avec un revêtement de dessous de caisse selon au moins l'une quelconque des revendications précédentes.
